(19) Europäisches Patentamt
European Patent Office
Office européen des brevets

(11) **EP 4 523 513 A1**

(12) **EUROPÄISCHE PATENTANMELDUNG**

(43) Veröffentlichungstag:
**19.03.2025   Patentblatt 2025/12**

(21) Anmeldenummer: **24190232.9**

(22) Anmeldetag: **23.07.2024**

(51) Internationale Patentklassifikation (IPC):
***A01D 41/127*** (2006.01)

(52) Gemeinsame Patentklassifikation (CPC):
**A01D 41/127**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: **14.09.2023   DE 102023124816**

(71) Anmelder: **CLAAS Selbstfahrende Erntemaschinen GmbH 33428 Harsewinkel (DE)**

(72) Erfinder:
• **Bormann, Bastian**
  **33334 Gütersloh (DE)**
• **Wilken, Andreas**
  **49143 Bissendorf (DE)**
• **Thiesmann, Waldemar**
  **49080 Osnabrück (DE)**
• **Heufekes, Maik**
  **48147 Münster (DE)**
• **Lücke, Andreas**
  **33184 Altenbeken (DE)**

(74) Vertreter: **CLAAS Gruppe Mühlenwinkel 1 33428 Harsewinkel (DE)**

(54) **VERFAHREN ZUR ANSTEUERUNG MINDESTENS EINER SELBSTFAHRENDEN LANDWIRTSCHAFTLICHEN ARBEITSMASCHINE**

(57)     Die vorliegende Erfindung betrifft ein Verfahren zur Ansteuerung mindestens einer selbstfahrenden landwirtschaftlichen Arbeitsmaschine (1) gemäß dem Oberbegriff von Anspruch 1.

Um ein Verfahren zur Ansteuerung einer selbstfahrenden Arbeitsmaschine (1) bereitzustellen, das die Probleme aus dem Stand der Technik behebt, sind erfindungsgemäß die folgenden Verfahrensschritte vorgeschlagen:
- Erfassen einer ersten Vorfeldinformation des geografischen Vorfelds (6) mittels des Sensors (7) des Vorfelderfassungssystems (5).
- Übermitteln der ersten Vorfeldinformation an das Steuersystem (8).
- Übermitteln einer zweiten Vorfeldinformation an das Steuersystem (8), wobei die zweite Vorfeldinformation mindestens eine Information aus einer Biomasseprognosekarte umfasst.
- Bestimmen mindestens eines Maschinenparameters zur Ansteuerung des Fahrantriebs und/oder des Arbeitsorgans (2) der selbstfahrenden Arbeitsmaschine (1) in Abhängigkeit zumindest der ersten und der zweiten Vorfeldinformation mittels der Recheneinheit (9) des Steuersystems (8).

Fig. 2

EP 4 523 513 A1

**Beschreibung**

Die vorliegende Anmeldung betrifft ein Verfahren zur Ansteuerung mindestens einer selbstfahrenden landwirtschaftlichen Arbeitsmaschine gemäß dem Oberbegriff von Anspruch 1. Des Weiteren betrifft die Anmeldung eine selbstfahrende landwirtschaftliche Arbeitsmaschine gemäß dem Oberbegriff von Anspruch 14.

Selbstfahrenden landwirtschaftlichen Arbeitsmaschinen wie Mähdreschern oder Feldhäckslern sind typischerweise eine Vielzahl von Arbeitsorganen zur Verarbeitung eines von einem abzuerntenden Feld aufgenommenen Ernteguts in Rahmen eines Ernteprozesses zugeordnet. Im Sinne der vorliegenden Erfindung wird dabei unter "Erntegut" ein gesamter aufgenommener Gutstrom verstanden, also einschließlich derjenigen Körner, welche noch nicht als Korngut aus dem Gutstrom gewonnen wurden, und den Körnern, welche ggf. in dem Gutstrom als Verlust verbleiben und mit dem Stroh abgelegt werden.

Ein Arbeitsorgan kann beispielhaft als ein an die Arbeitsmaschine anbringbares Vorsatzgerät, als Schrägförderer, als Dreschvorrichtung, als Abscheidevorrichtung, als Reinigungsvorrichtung, als Kornelevator, als Überkehrschnecke, als Korntankentleervorrichtung, als Nachbeschleuniger, als Kornschnecke und/oder als Korntankschnecke ausgebildet sein.

Eine als Mähdrescher ausgestaltete selbstfahrende landwirtschaftliche Arbeitsmaschine dient der Mahd und dem Drusch von Körnerfrüchten. Der Arbeitsmaschine sind dabei in aller Regel eine Reihe von Arbeitsorganen wie Schneidwerk, Dreschwerk, Abscheideanordnung, Reinigungsanordnung und Verteilanordnung zugeordnet. Ein Drusch erfolgt durch das Dreschwerk, welches aus dem von dem Mähdrescher durch das Schneidwerk aufgenommenen Erntegut Korngut gewinnt, das nach dem Dreschen der Abscheideanordnung und anschließend über die Reinigungsanordnung einem Getreidetank zugeführt wird. Als weitere Bestandteile des Ernteguts bleiben z.B. die Spreu und das Stroh übrig, welche entweder über das Feld verteilt oder - im Falle des Strohs - auf Schwad z.B. zur späteren Aufnahme durch eine Ballenpresse gelegt werden können.

Die Arbeitsorgane werden dabei durch Vorgabe verschiedener Maschinenparameter angesteuert, die während des Ernteprozesses anzupassen sind. Mit der Einstellung dieser Maschinenparameter lässt sich eine zumindest teilweise autonome Einstellung und Optimierung des Ernteprozesses erzielen.

Ein Dreschwerk kann beispielsweise durch die Vorgabe verschiedener Dreschwerksparameter angesteuert werden. Hierunter fallen in Abhängigkeit vom Aufbau des Dreschwerks Antriebsparameter wie beispielsweise eine Trommeldrehzahl oder sonstige Bewegungskennzahlen der Dreschtrommel, sowie eine Korbweite - also der Abstand zwischen der Dreschtrommel und einem Dreschkorb. Der optimalen Ansteuerung der Arbeitsorgane kommt für eine erzielbare Erntequalität und einen erzielbaren Erntegutdurchsatz besondere Bedeutung zu.

Weiterhin weist die selbstfahrende landwirtschaftliche Arbeitsmaschine mindestens einen Fahrantrieb zum Antrieb der Arbeitsmaschine auf. Eine von dem Fahrantrieb typischerweise einzustellende Fahrgeschwindigkeit bestimmt dabei in Verbindung mit einer Bestandsdichte des abzuerntenden Felds den durch die Arbeitsmaschine hindurchlaufenden Erntegutdurchsatz.

Im Sinne der vorliegenden Erfindung ist der Begriff "Bestandsdichte" weit auszulegen. Er umfasst jede Angabe, die Aufschluss darüber gibt, welche Pflanzenmenge pro Fläche im abzuerntenden Feld vorhanden ist. Dies kann beispielsweise die Anzahl der Pflanzenstängel pro Fläche, das Pflanzenvolumen pro Fläche oder dergleichen sein. Der Begriff "Fläche" bezeichnet hier die Fläche, oder einen Teil der Fläche, des abzuerntenden Felds.

Als "Erntegutdurchsatz" wird im Sinne der vorliegenden Erfindung die pro Zeit von der selbstfahrenden landwirtschaftlichen Arbeitsmaschine aufgenommene Menge des Ernteguts verstanden.

Aufgrund der vorbeschriebenen Korrelation hängen eine Vielzahl von Maschinenparametern der Arbeitsorgane der selbstfahrenden Arbeitsmaschine von der Fahrgeschwindigkeit ab. Der Fahrantrieb kann dabei beispielsweise als Verbrennungsmotor, insbesondere in Form eines Dieselmotors, ausgebildet sein und neben einem Vortrieb der Arbeitsmaschine auch zum Antrieb der Arbeitsorgane der Arbeitsmaschine vorgesehen sein. Der Fahrantrieb ermöglicht einen Vortrieb der Arbeitsmaschine mit einer Fahrgeschwindigkeit in eine Fahrtrichtung entlang des abzuerntenden Felds.

Ferner umfasst die Arbeitsmaschine mindestens ein Vorfelderfassungssystem, welches Informationen hinsichtlich eines geografischen Vorfelds der selbstfahrenden Arbeitsmaschine erfasst.

Im Sinne der vorliegenden Erfindung wird unter einem "geographischen Vorfeld" eine Umgebung der selbstfahrenden Arbeitsmaschine verstanden. Das Vorfeld betrifft mithin nichts, was sich innerhalb der Arbeitsmaschine abspielt. Dem Sensor ist ein räumlicher Geltungsbereich zugeordnet, der sich in der Umgebung der Arbeitsmaschine, vorzugsweise unmittelbar vor der Arbeitsmaschine in Fahrtrichtung betrachtet, befindet. Zu dem geografischen Vorfeld der selbstfahrenden Arbeitsmaschine zählt mithin insbesondere das abzuerntende Feld bzw. zumindest ein aktuell abzuerntender Teilabschnitt des Felds.

Das Vorfelderfassungssystem umfasst dabei mindestens einen an der selbstfahrenden Arbeitsmaschine angeordneten Sensor. Die von dem Sensor erfasste Information kann zahlreiche unterschiedliche Aspekte des Vorfelds der Arbeitsmaschine betreffen. Hierunter fallen beispielsweise eine Information betreffend einen Abschnitt des abzuerntenden Felds, eine Information betreffend die geometrischen Verhältnisse des abzuerntenden Feldes oder eine Information betreffend eine Umgebung des abzuerntenden Felds.

Weiterhin weist die Arbeitsmaschine ein Steuersystem auf. Das Steuersystem weist wiederum mindestens eine Recheneinheit zur Verarbeitung der von dem Vorfelderfassungssystem erfassten Informationen zu mindestens einem Maschinenparameter zur Ansteuerung des mindestens einen Fahrantriebs und/oder des mindestens einen Arbeitsorgans der selbstfahrenden Arbeitsmaschine auf.

Typischerweise können die Arbeitsorgane der Arbeitsmaschine mittels des Steuersystems basierend auf einer Ernteprozessstrategie angesteuert werden. Die Ernteprozessstrategie umfasst dabei eine Zielvorgabe der Einstellung oder der Optimierung von Ernteprozessparametern. Die Umsetzung der Ernteprozessstrategie kann dabei jeweils durch eine entsprechende Vorgabe von Maschinenparametern der Arbeitsorgane durch das Steuersystem erfolgen. In Abhängigkeit von der Ausgestaltung des Steuersystems kann es möglich sein, die jeweilige Ernteprozessstrategie aus einer Anzahl vorbestimmter Ernteprozessstrategien auszuwählen und/oder eine Parametrierung der jeweiligen Ernteprozessstrategie benutzerdefiniert vorzunehmen.

Die EP 3 085 221 B1 beschreibt ein Erntesystem mit einer selbstfahrenden Arbeitsmaschine, insbesondere einem Mähdrescher, mit mehreren Arbeitsorgangen sowie einem Fahrerassistenzsystem. Weiterhin weist das Erntesystem ein Umfeldsensorsystem auf, welches Umfeldinformationen erfasst. Darüber hinaus weist das Erntesystem eine Rechenvorrichtung auf, die in Abhängigkeit von den Umfeldinformationen Maschinenparameter für die Arbeitsorgane definiert. Bei den Umfeldinformationen kann es sich insbesondere um einen Feldbestand oder die geometrischen Verhältnisse des den Feldbestand aufweisenden Feldes handeln. Das Umfeldsensorsystem kann dabei insbesondere Umfeldsensoren in Form von bildgebenden Sensoren wie Kamerasensoren und/oder Lasersensoren und/oder Radarsensoren aufweisen.

Als problematisch bei der bekannten Arbeitsmaschine hat sich jedoch herausgestellt, dass eine Bestandshöhe und eine Bestandsdichte mittels eines rein auf bildgebenden Sensoren basierenden Umfeldsensorsystems nicht oder lediglich in unzureichender Qualität bestimmt werden kann. Die Einstellung der Arbeitsorgane kann mithin nicht in idealer Weise in Abhängigkeit aller die das abzuerntende Feld bestimmenden Faktoren erfolgen.

Weiterhin wird beispielhaft auf die europäische Patentanmeldung EP 3 097 759 A1 verwiesen, die ein Verfahren zur Ansteuerung einer selbstfahrenden Arbeitsmaschine betrifft, welches ebenfalls mit mehreren Arbeitsorganen ausgestattet ist. Das Verfahren soll eine Fahrgeschwindigkeit der Arbeitsmaschine optimal auf das abzuerntende Feld einstellen können. Hierzu umfasst die Arbeitsmaschine ein Steuersystem, welches Informationen zu dem Feldbestand einerseits aus offline erzeugten georeferenzierten Prognose-Bestandsinformationen sowie andererseits aus online erzeugten georeferenziertes Ist-Bestandsinformationen erhält. Die Kombination der beiden Informationen soll die Nachteile einer Nutzung ausschließlich der offline erzeugten Prognose-Bestandsinformationen ausgleichen. Letztere ermöglichen zwar eine vorausschauende Ansteuerung, allerdings reichen diese aufgrund eines Zeitversatzes zwischen der Erzeugung und der Durchführung des Ernteprozesses alleine nicht aus. Ein entsprechende Prognose-Bestandsmodell kann dabei auf Luftaufnahmen, insbesondere Satellitenaufnahmen und/oder Drohnenaufnahmen, basieren. Die online erzeugten Ist-Bestandsinformationen können in Form von Ertragsinformationen vorliegen, die mittels einer Sensoranordnung, vorzugsweise eines Korndurchsatzsensors, eines Bestandsdichtesensors oder eines in die Arbeitsmaschine integrierten Schichthöhensensors, ermittelt wurden.

Die EP 3 530 098 A1 beschreibt ein Verfahren zur Ermittlung einer Bestandsdichte eines abzuerntenden Feldbestands. Hierzu umfasst die Arbeitsmaschine eine Sensoranordnung zur Aussendung und zum Empfangen elektromagnetischer Sendestrahlen, wobei die Sensoranordnung beispielsweise aus einem Laserscanner gebildet sein kann. Vorteil des Verfahrens soll es sein, dass beim Aussenden eines Sendepulses unterschiedliche Teilstrahlen erzeugt werden, sodass hintereinanderliegende Pflanzen des Feldbestands die elektromagnetischen Strahlen reflektieren. Auf diese Weise soll die Bestandsdichte einfach und schnell bestimmbar sein.

Aus der europäischen Patentanmeldung EP 3 772 269 A1 geht eine Arbeitsmaschine mit mehreren Arbeitsorganen und einem Umfeldsensorsystem zur Erfassung mindestens einer den Ernteprozess betreffenden Information hervor. Weiterhin weist die Arbeitsmaschine ein Systemmodell sowie eine Rechenvorrichtung auf, wobei letztere basierend auf dem Systemmodell die Maschinenparameter für die Arbeitsorgane ermittelt. Die Ermittlung erfolgt dabei in Abhängigkeit der von dem Umfeldsensorsystem ermittelten Informationen. Bei den ermittelten Informationen kann es sich um den Feldbestand oder geometrische Verhältnisse des den Feldbestand aufweisenden Felds handeln, die mittels Sensoren des Umfeldsensorsystems ermittelt wurden.

Als problematisch bei bekannten Verfahren zur Ansteuerung von selbstfahrenden Arbeitsmaschinen hat sich jedoch herausgestellt, dass eine Prognose des Erntegutdurchsatzes mittels Laserscannern oder Kameras allein nicht zuverlässig ist.

Bei Verwendung von Laserscannern, insbesondere in Form von LiDAR-Sensoren, hat es sich als problematisch erwiesen, eine Bestandsdichte des abzuerntenden Felds zuverlässig bestimmen zu können. Eine Bestimmung über eine Pulsweite eines ausgesandten Pulses kann dabei insbesondere aufgrund eines Einflusses von Sonnenlicht und Schatten auf die Messung nicht zuverlässig erfolgen. Eine gemessene Verteilung einer Reflexionshöhe zur Bestimmung der Bestandsdichte führt ebenfalls nur bedingt zum Erfolg.

Der vorliegenden Anmeldung liegt die Aufgabe zugrunde, ein Verfahren zur Ansteuerung einer selbstfahrenden Arbeitsmaschine bereitzustellen, das die Probleme aus dem Stand der Technik behebt.

Die zugrunde liegende Aufgabe wird erfindungsgemäß mittels des Verfahrens mit den Merkmalen des Anspruchs 1 gelöst. Vorteilhafte Ausgestaltungen ergeben sich aus den zugehörigen Unteransprüchen.

Das Verfahren ist durch die folgenden Verfahrensschritte gekennzeichnet:

In einem ersten Schritt wird eine erste Vorfeldinformation des geografischen Vorfelds bestimmt. Hierzu wird der mindestens eine Sensor des Vorfelderfassungssystems genutzt. Der Sensor kann dabei vorzugsweise frontseitig an der selbstfahrenden landwirtschaftlichen Arbeitsmaschine, insbesondere frontseitig an einer Fahrerkabine der Arbeitsmaschine, angeordnet sein. Vorzugsweise kann allerdings auch vorgesehen sein, dass das Vorfelderfassungssystem eine Mehrzahl von Sensoren umfasst, um das geografische Vorfeld der Arbeitsmaschine zu scannen.

In einem zweiten Schritt wird die erfasste erste Vorfeldinformation an das Steuersystem der selbstfahrenden Arbeitsmaschine übermittelt. Hierbei kann vorzugsweise vorgesehen sein, dass das Steuersystem neben einer Recheneinheit auch einen Speicher zur zumindest vorübergehenden Speicherung der von dem Vorfelderfassungssystem erfassten Informationen aufweist, sodass die Vorfeldinformation zunächst an den Speicher übermittelt wird, bevor sie von der Recheneinheit abgerufen wird. Ebenso kann vorgesehen sein, dass die Vorfeldinformation unmittelbar an die Recheneinheit des Steuersystems übermittelt wird.

In einem dritten Schritt wird eine zweite Vorfeldinformation an das Steuersystem übermittelt. Bei der zweiten Vorfeldinformation handelt es sich um eine Information, die aus einer Biomasseprognosekarte entnommen wurde. Bei der Biomasseprognosekarte handelt es sich um eine Karte mit Informationen zu der voraussichtlich zur Verfügung stehenden, von der Arbeitsmaschine aufzunehmenden Biomasse. Als "Biomasse" wird im Sinne der vorliegenden Erfindung die bei dem Ernteprozess zur Verfügung stehende abzuerntende Menge an Erntegut verstanden. Hierzu zählen insbesondere auf dem Feld aufstehende, abzuerntende Pflanzen. Neben der Biomasse kann die Biomasseprognosekarte jedoch weitere auch Informationen betreffend das abzuerntende Feld, insbesondere eine Abreife des Feldbestands sowie einzelne Feldzonen, enthalten.

Die Biomasseprognosekarte ist dabei zumindest zum Teil offline, also zeitlich versetzt zu dem jeweils laufenden Ernteprozess, erzeugt worden. Bei der von dem Sensor erfassten Information handelt es sich hingegen um georeferenzierte Informationen zu dem in Rede stehenden Feld, die online an der Arbeitsmaschine erzeugt werden.

Die Biomasseprognosekarte kann insbesondere auch GPS-basiert sein, d.h. in Abhängigkeit eines Aufenthaltsorts der landwirtschaftlichen Arbeitsmaschine, Informationen betreffend das geografische Vorfeld der landwirtschaftlichen Arbeitsmaschine bereitstellen.

Die Biomasseprognosekarte kann dabei auf Basis von verschiedenen Informationen erzeugt worden sein. Zur Erstellung der Biomasseprognosekarte können Wachstumsmodelle und statistische Modelle, insbesondere unter Verwendung von künstlicher Intelligenz, verwendet werden. Darüber hinaus können Vegetationsindizes und Kanäle genutzt werden. Die Biomasseprognosekarte erhält dabei für eine Vielzahl von Bezugspunkten auf dem abzuerntenden Feld Informationen zu einem voraussichtlichen Bestand des abzuerntenden Felds. Insbesondere kann vorgesehen sein, dass die Biomasseprognosekarte aus einer matrixartigen Anordnung von Pixeln gebildet ist, wobei jedem Pixel eine oder mehrere Informationen betreffend das abzuerntende Feld zugeordnet sind.

In einem letzten Schritt werden zumindest die erste und die zweite Vorfeldinformation mittels der Recheneinheit zu mindestens einem Maschinenparameter zur Ansteuerung eines Fahrantriebs und/oder eines Arbeitsorgans der selbstfahrenden Arbeitsmaschine verarbeitet. Neben der ersten und der zweiten Vorfeldinformationen können dabei auch weitere Informationen betreffend das Vorfeld der selbstfahrenden Arbeitsmaschine bei der Bestimmung des Maschinenparameters herangezogen werden. Auch kann vorgesehen sein, dass mehrere Maschinenparameter bestimmt werden. Beispielsweise ist denkbar, dass jeweils ein Maschinenparameter für jedes der Arbeitsorgane und auch ein Maschinenparameter für den Fahrantrieb bestimmt werden.

Der mittels der Recheneinheit ermittelte Maschinenparameter kann schließlich an eine Regeleinrichtung des Steuersystems übergeben werden, welche sodann eine Ansteuerung der landwirtschaftlichen Arbeitsmaschine vornimmt. So ist denkbar, dass der Maschinenparameter den Fahrantrieb betrifft. Die Regeleinrichtung übermittelt in diesem Fall eine Soll-Geschwindigkeit an eine Fahrgeschwindigkeitssteuerung, die den Fahrantrieb ansteuert und einen Vortrieb der landwirtschaftlichen Arbeitsmaschine mit der ermittelten Fahrgeschwindigkeit bewirkt.

Das erfindungsgemäße Verfahren hat viele Vorteile. In Versuchen hat sich herausgestellt, dass sich aus einer Verbindung einer ersten Vorfeldinformation mit Informationen aus einer Biomasseprognosekarte geeignete Maschinenparameter zur Ansteuerung des Fahrantriebs und/oder der Arbeitsorgane bestimmen lassen.

Ein besonderer Vorteil des erfindungsgemäßen Verfahrens liegt insbesondere darin, dass die Bestimmung einer auf die Gegebenheiten des abzuerntenden Felds angepassten Fahrgeschwindigkeit der Arbeitsmaschine ermöglicht ist. Die Fahrgeschwindigkeit kann dabei derart gewählt werden, dass ein maximal möglicher Erntegutdurchsatz mittels der Arbeitsmaschine erzielt werden kann.

Die Erfindung geht auf die Überlegung zurück, dass die Ermittlung mindestens eines Maschinenparameters für die selbstfahrende landwirtschaftliche Arbeitsmaschine auf einer Verknüpfung von prognostizierten Informationen zum abzuerntenden Feld mit Informationen zum Feld zum Zeitpunkt des Erntevorgangs erfolgen kann. Damit ist einerseits eine Prognose einer Soll-Fahrgeschwindigkeit für die landwirtschaftliche Arbeitsmaschine und andererseits eine Orientierung der Soll-Fahrgeschwindigkeit auf die tatsächlichen Gegebenheiten möglich. Bei der Soll-Fahrgeschwindigkeit handelt es sich um die Fahrgeschwindigkeit, die der Fahrgeschwindigkeitssteuerung der landwirtschaftlichen Arbeitsmaschine vorgegeben wird. Die Fahrgeschwindigkeitssteuerung ist dabei in der Lage, den Fahrantrieb der landwirtschaftlichen Arbeitsmaschine zu steuern. Es kann aber auch eine manuelle Einstellung der Soll-Fahrgeschwindigkeit durch einen Bediener der selbstfahrenden landwirtschaftlichen Arbeitsmaschine vorgesehen sein. Hierfür kann eine Ein-/Ausgabeeinheit vorgesehen sein, über welche die ermittelte Soll-Fahrgeschwindigkeit zur Einstellung durch den Bediener angezeigt wird.

Bei den prognostizierten Informationen zum abzuerntenden Feld, die aus der Biomasseprognosekarte stammen, handelt es sich um georeferenzierte Informationen zu dem in Rede stehenden Feld. Das erfindungsgemäße Verfahren erlaubt somit nicht nur eine im Hinblick auf eine jeweilige Ernteprozessstrategie optimale Ermittlung der Fahrgeschwindigkeit. Vielmehr ist mit der vorschlagsgemäßen Lösung eine Prognose der Fahrgeschwindigkeit möglich, angepasst auf die online an der Arbeitsmaschine von dem Sensor erfassten Informationen.

Es kann vorgesehen sein, dass die erste und die zweite Vorfeldinformation zu einem Prognose-Bestandsmodell verarbeitet werden. Vorzugsweise kann weiter vorgesehen sein, dass derjenige Teil des Prognose-Bestandsmodells angepasst wird, der mindestens einen zukünftigen Ernteprozessabschnitt betrifft. Dies bedeutet, dass sich das Prognose-Bestandsmodell online immer wieder auf die tatsächlichen Gegebenheiten anpassen lässt, so dass die Genauigkeit aller darauffolgenden Prognosen für den zu bestimmenden Maschinenparameter, insbesondere der Fahrgeschwindigkeit, ansteigt. Für die Erzeugung des Prognose-Bestandsmodells sind verschiedene bevorzugte Varianten denkbar. In besonders bevorzugter Ausgestaltung kann das Prognose-Bestandsmodell zumindest zum Teil aus von dem Sensor erfassten und/oder einer Biomasseprognosekarte erhaltenen Informationen vorangegangener oder parallel ablaufender Ernteprozesse ergänzt werden. Dadurch kann auf aufwendige technische Hilfsmittel zur Erzeugung des Prognose-Bestandsmodells verzichtet werden.

Eine vorteilhafte Ausgestaltung kann vorsehen, dass ein an der Arbeitsmaschine angeordnetes Fahrerassistenzsystem vorgesehen ist, das mit mindestens einem separat von der Arbeitsmaschine angeordneten Fernassistenzsystem kommuniziert. Bei dem Fernassistenzsystem kann es sich um ein zentrales Planungssystem oder aber um das Fahrerassistenzsystem einer weiteren Arbeitsmaschine handeln. Auf diese Weise lässt sich ein Erntesystem aus mehreren Arbeitsmaschinen und ggf. einem zentralen Planungssystem erzeugen, bei dem relevante Informationen, insbesondere das jeweilige Prognose-Bestandsmodell, ausgetauscht werden können.

Gemäß einer weiteren vorzugsweisen Ausgestaltung der Erfindung ist vorgesehen, dass es sich bei der ersten Vorfeldinformation um eine Bestandsdichte, eine Schnitthöhe, eine Bestandshöhe und/oder eine Teilbreite des geografischen Vorfelds der Arbeitsmaschine handelt.

Die aktuelle "Schnitthöhe" ist dabei typischerweise - sofern die Arbeitsmaschine als Mähdrehscher ausgebildet ist - abhängig von einem Arbeitspunkt eines Schneidwerks der Arbeitsmaschine. Darüber hinaus hängt die Schnitthöhe von einer eingestellten Stoppelhöhe ab.

Im Sinne der vorliegenden Erfindung wird unter einer "aktuellen Teilbreite" eine tatsächliche Auslastung einer Arbeitsbreite eines Vorsatzgeräts der selbstfahrenden Arbeitsmaschine verstanden, wobei unter einer "Arbeitsbreite" wiederum eine zu einem bestimmten Zeitraum während des Ernteprozesses genutzte Breite des Vorsatzgeräts verstanden wird. Als "Arbeitsbreite" kann mit anderen Worten die gesamte zur Bearbeitung des abzuerntenden Felds zur Verfügung stehende Breite des Vorsatzgeräts verstanden werden. Beispielsweise kann vorgesehen sein, dass die Arbeitsmaschine das Feld abfährt, wobei eine Breite des abzuerntenden Abschnitts des Felds eine Arbeitsbreite des Vorsatzgeräts unterschreitet, sodass eine Bearbeitung des Felds - bei Nutzung der gesamten Breite des Vorsatzgeräts - eine Bearbeitung eines nicht zum abzuerntenden Feld gehörenden Teils zur Folge hätte. In einem solchen Fall wird lediglich ein "Teil" der Arbeitsbreite des Vorsatzgeräts genutzt, dieser Teil wird im Sinne der vorliegenden Erfindung als "aktuelle Teilbreite" bezeichnet.

Daneben ist auch vorstellbar, dass die Bestandhöhe des abzuerntenden Felds nicht mittels des Sensors, sondern durch eine dem Steuersystem zugeführte Höhendifferenzkarte oder eine Topologiekarte bestimmt wird. Die Höhendifferenzkarte kann dabei auf Informationen basieren, die mittels einer Drohne, eines Flugzeugs oder eines Satellits ermittelt wurden.

Es kann vorgesehen sein, dass die vorgenannten Vorfeldinformationen mittels eines einzigen Sensors, der dem Vorfelderfassungssystem zugeordnet ist, erfasst werden. Ebenso kann jedoch auch vorgesehen sein, dass das Vorfelderfassungssystem eine Mehrzahl von Sensoren umfasst, wobei jeder der Sensoren eine andere Vorfeldinformation erfasst.

Gemäß einer vorzugsweisen Ausgestaltung der Erfindung ist vorgesehen, dass das Vorfelderfassungssystem eine dritte Vorfeldinformation erfasst, wobei die dritte Vorfeldinformation ebenfalls bei der Bestimmung des Maschinenparameters berücksichtigt wird. Die dritte Vorfeldinformation kann dabei ebenfalls mittels des Sensors des Vorfelderfassungssystem erfasst werden. Ebenso kann jedoch auch vorgesehen sein, dass die dritte Vorfeldinformation einer anderen Quelle entstammt, beispielsweise einer Topologiekarte des abzuerntenden Felds.

Bei der dritten Vorfeldinformation kann es sich - analog zu der ersten Vorfeldinformation - um die Bestandsdichte, die Schnitthöhe, die Bestandshöhe und/oder die Teilbreite des geografischen Vorfelds der Arbeitsmaschine handeln.

Eine vorzugsweise Ausgestaltung der Erfindung sieht vor, dass der Sensor als LiDAR-Sensor ausgebildet ist. Als LiDAR -Sensor wird ein Sensor verstanden, der mittels einer Aussendung von Lichtwellen Abstände und Geschwindigkeiten von Zielobjekten bestimmen kann. Er arbeitet mithin nach demselben Prinzip wie ein Radar, unterscheidet sich jedoch in der Frequenz der ausgesandten Lichtwellen. Mittels eines LiDAR-Sensors lassen sich Information betreffend das geografische Vorfeld der landwirtschaftlichen Arbeitsmaschine, insbesondere die Teilbreite sowie die Bestandshöhe des abzuerntenden Felds, zuverlässig bestimmen. Mittels des LiDAR-Sensors lässt sich jedoch auch ein Anteil an Lagergetreide, d.h. umgeknicktes Getreide, dessen Ernte erschwert ist, erkennen.

Gemäß einer vorzugsweisen Ausgestaltung der Erfindung ist der Sensor als Kamera, vorzugsweise als Stereo-Kamera, ausgebildet. Die Kamera kann dabei vorzugsweise an einer Fahrerkabine der landwirtschaftlichen Arbeitsmaschine angeordnet sein. Die Kamera kann dazu genutzt werden, die Bestandshöhe, die Bestandsdichte, die Teilbreite, den Anteil an Lagergetreide, Unkraut sowie einen Grad der Abreife des abzuerntenden Felds zu erkennen und diese Informationen als Vorfeldinformationen an das Steuersystem zu übermitteln.

Gemäß einer vorteilhaften Ausgestaltung der Erfindung ist vorgesehen, dass das Vorfelderfassungssystem zwei Sensoren aufweist, wobei ein erster Sensor als LiDAR-Sensor ausgebildet ist, während ein zweiter Sensor als Kamera ausgebildet ist, wobei der erste Sensor die erste Vorfeldinformation erfasst, während der zweite Sensor die dritte Vorfeldinformation erfasst. In Versuchen hat sich herausgestellt, dass eine Kombination der zwei vorgenannten Sensoren besonders dazu geeignet ist, das geografische Vorfeld der landwirtschaftlichen Arbeitsmaschine in besonders zuverlässiger Weise zu bestimmen. Jeder der Sensoren erfasst dabei eine Vorfeldinformation betreffend das geografische Vorfeld der landwirtschaftlichen Arbeitsmaschine und übermittelt diese vorzugsweise an das Steuersystem, welches die beiden Vorfeldinformationen zusammen mit der zweiten Vorfeldinformation zu einem Maschinenparameter verarbeitet.

Eine weitere Ausgestaltung der Erfindung sieht vor, dass der Maschinenparameter in Abhängigkeit eines von der Recheneinheit zumindest auf Basis der ersten und der zweiten Vorfeldinformation ermittelten Erntegutdurchsatzes bestimmt wird. Es kann mithin vorgesehen sein, dass mittels der ersten und zweiten Vorfeldinformation zunächst ein zu erwartender Erntegutdurchsatz bestimmt wird, bevor auf Basis des ermittelten Erntegutdurchsatzes der Maschinenparameter für den Fahrantrieb und/oder die Arbeitsorgane bestimmt wird. Bei dem Erntegutdurchsatz handelt es sich um einen Schätzwert, der zumindest auf Basis der ersten und der zweiten Vorfeldinformation generiert wird.

Gemäß einer besonders bevorzugten Ausgestaltung kann ferner vorgesehen sein, dass der Erntegutdurchsatz in Abhängigkeit der ersten, der zweiten und der weiteren dritten Vorfeldinformation bestimmt wird. Bei der ersten Vorfeldinformation handelt es sich in diesem Fall um eine aktuelle Teilbreite des geografischen Vorfelds. Bei der zweiten Vorfeldinformation handelt es sich um eine Information aus der Biomasseprognosekarte. Bei der dritten Vorfeldinformation handelt es sich in diesem Fall um eine aktuelle Schnitthöhe des geografischen Vorfelds. Die Berücksichtigung der vorgenannten Vorfeldinformationen führt zu einer verbesserten Bestimmung des Erntegutdurchsatzes und somit zu einer verbesserten Bestimmung des Maschinenparameters.

Ebenso kann gemäß einer weiteren vorzugsweisen Ausgestaltung der Erfindung vorgesehen sein, dass eine weitere, vierte Vorfeldinformation bei der Bestimmung des Erntegutdurchsatzes berücksichtigt wird, nämlich die Bestandshöhe des geografischen Vorfelds. Die Berücksichtigung von vier Vorfeldinformationen birgt den Vorteil einer verbesserten Bestimmung des Erntegutdurchsatzes.

Eine vorteilhafte Ausgestaltung der Erfindung sieht vor, dass die Biomasseprognosekarte auf Satellitenbildern des abzuerntenden Felds basiert. Dabei kann vorzugsweise vorgesehen sein, dass eine Positionskorrektur der aufgenommenen Satellitenbilder erfolgt, bevor diese zur Erstellung der Biomasseprognosekarte herangezogen werden. Auch ist denkbar, dass Bilder verschiedener Satelliten genutzt werden, um eine Genauigkeit der Satellitenbilder zu verbessern.

Vorzugsweise ist vorgesehen, dass die Satellitenbilder des abzuerntenden Felds in einem Wellenlängenbereich von etwa 380 nm bis 3000 nm, vorzugsweise von etwa 430 nm bis 780 nm, aufgenommen werden. Auch kann vorgesehen sein, die Satellitenbilder in einem Wellenlängenbereich von 430 nm bis 885 nm aufzunehmen, um den Wellenlängenbereich des nahen Infrarots (NIR) zu umfassen. Weiterhin kann es bevorzugt sein, wenn der jeweilige Satellit mehrere Spektralbänder detektiert, vorzugsweise 5 bis 15 Spektralbänder.

Vorzugsweise kann weiter vorgesehen sein, dass eine räumliche Auflösung jedes Satellitenbilds in einem Bereich von 2 m bis 20 m, vorzugsweise 3 m bis 10 m, liegt. Ebenso kann jedoch auch vorgesehen sein, Satellitenbilder mit einer kleineren Auflösung, vorzugsweise im Bereich von 0,3 m bis 2 m, zu wählen, welche jedoch in aller Regel vergleichsweise hohen Beschaffungskosten unterliegen. Auch kann vorgesehen sein, dass das Satellitenbild des abzuerntenden Felds in zeitlichen Abständen von Stunden bis zu mehreren Tagen wiederholt aufgenommen wird, um die hieraus abgeleitete Biomasseprognosekarte kontinuierlich anpassen zu können.

Beispielhaft können die unter der Raumfahrtmission Sentinel-2 zusammengefassten Satelliten, Sentinel-2A und Sentinel-2B, als Satelliten zur Erstellung der Satellitenbilder herangezogen werden. Bei diesen Satelliten handelt es sich um ein Paar optischer Erdbeobachtungssatelliten in einem sonnensynchronen Erdorbit. Alternativ oder zusätzlich können auch Satellitenbilder von Zusammenschlüssen von Satelliten genutzt werden, beispielhaft des Zusammenschlusses "PlanetScope". Insbesondere für den Fall, dass Schwankungen bei der Bestimmung des Bestands auftreten, kann das Hinzuziehen von Satellitenbildern verschiedener Satelliten besonders bevorzugt sein.

Ebenso kann jedoch auch vorgesehen sein, dass die Biomasseprognosekarte auf Drohnenaufnahmen und/oder auf Aufnahmen mittels Radarfernerkundung basiert, wobei die Aufnahmen in bekannter Weise von dem abzuerntenden Feld erstellt wurden.

Eine besonders vorteilhafte Weiterentwicklung des erfindungsgemäßen Verfahrens sieht vor, dass die Biomasseprognosekarte in Abhängigkeit einer Reflexion des Sonnenlichts der auf dem Feld befindlichen Pflanzen bestimmt wird, wobei hierzu ein normierter differenzierter Vegetationsindex (NDVI) bestimmt wird. Der normierte differenzierte Vegetationsindex sieht vor, dass ein Teil des an den auf dem abzuerntenden Feld aufstehenden Pflanzen reflektierten Teils des Sonnenlichts gemessen wird, insbesondere im Infrarot-Bereich des Spektrums, welcher in etwa einem Wellenlängenbereich von 625 nm bis 780 nm entspricht. Zugleich kann die Reflexion des Teils des Sonnenlichts gemessen werden, welcher im roten, sichtbaren Bereich liegt, welcher in etwa einem Wellenlängenbereich von 700 nm bis 1300 nm entspricht.

Der vorgenannte normierte differenzierte Vegetationsindex (NDVI) lässt sich sodann wie folgt bestimmen:

$$NDVI = \frac{NIR - Rot}{NIR + Rot}$$

Dabei stellt "NIR" den im Infrarot-Bereich gemessenen Wert der Reflexion dar, während "Rot" den Wert des im roten, sichtbaren Teil des Spektrums gemessenen Teil des Sonnenlichts darstellt.

Die gemessenen Werte lassen sich schließlich in eine Biomasseprognosekarte umwandeln, wobei ein hoher Wert des NDVI auf eine hohe photosynthetische Aktivität schließen lässt, während ein niedriger Wert des NDVI auf eine niedrige photosynthetische Aktivität schließen lässt, welche wiederum auf kranke oder tote Vegetation, auf Steine oder auf Ackerboden hinweist. Die mittels Werte des normierten differenzierten Vegetationsindex erzeugte Biomasseprognosekarte gibt mithin einen zuverlässigen Überblick über die zur Verfügung stehende Biomasse.

Vorzugsweise kann es sich bei der zweiten Vorfeldinformation um einen Wert des Vegetationsindex handeln. Mithin kann vorgesehen sein, dass neben der mittels des Sensors bestimmten ersten Vorfeldinformation der landwirtschaftlichen Arbeitsmaschine ein Wert des NDVI, der ein Maß für die photosynthetische Aktivität darstellt, bei der Bestimmung des Maschinenparameters herangezogen wird. Eine Kombination dieser beiden Vorfeldinformationen hat sich als besonders vorteilhaft erwiesen.

Vorzugsweise kann es sich bei der zweiten Vorfeldinformation um einen gewichteten Mittelwert eines Segments des Vorfelds des Vegetationsindex handeln. Beispielhaft ist vorstellbar, dass der Vegetationsindex für einen relevanten Messbereich, auch "region of interest" genannt, bestimmt wird. Der relevante Messbereich kann wiederum in eine Vielzahl von Segmenten unterteilt werden. Vorzugsweise liegt der relevante Messbereich in dem Vorfeld der landwirtschaftlichen Arbeitsmaschine.

Dabei kann vorgesehen sein, dass der Vegetationsindex als gewichteter Mittelwert für mehrere relevante Messbereiche bestimmt wird, wobei sich die relevanten Messbereiche als streifenartige Bereiche einstellen. Beispielhaft kann vorgesehen sein, dass drei, in verschiedenen Abständen von einem Messerbalken der Arbeitsmaschine angeordnete relevante Messbereiche herangezogen werden, die jeweils in mehrere Segmente unterteilt worden. Ein Segment ist dabei größer als eine Auflösung des zugehörigen Satellitenbilds, sodass für jedes Segment eine gewichtete Mittelung des entsprechenden Vegetationsindex erfolgen kann.

Eine weitere Ausgestaltung der Erfindung sieht vor, dass es sich bei dem Maschinenparameter um eine Fahrgeschwindigkeit der landwirtschaftlichen Arbeitsmaschine handelt. Ebenso kann insbesondere vorgesehen sein, dass es sich bei dem Maschinenparameter um einen Parameter zur Einstellung eines Vorfahrtreglers der selbstfahrenden Arbeitsmaschine, der eine Einstellung der Fahrgeschwindigkeit ermöglicht, handelt.

Die eingangs genannte Aufgabe wird ferner durch eine selbstfahrende landwirtschaftliche Arbeitsmaschine gemäß Anspruch 14 gelöst. Die in Bezug auf das erfindungsgemäße Verfahren genannten Vorteile gelten dabei analog für die erfindungsgemäße landwirtschaftliche Arbeitsmaschine. Die erfindungsgemäße selbstfahrende landwirtschaftliche Arbeitsmaschine kann als selbstfahrender Feldhäcksler oder als selbstfahrender Mähdrescher für den landwirtschaftlichen Einsatz auf einem landwirtschaftlichen Feld ausgebildet sein.

Die Erfindung ist nachstehend anhand eines Ausführungsbeispiels, das in den Figuren dargestellt ist, näher erläutert. Es zeigt:

Fig. 1:	Eine Schnittdarstellung einer erfindungsgemäßen selbstfahrenden landwirtschaftlichen Arbeitsmaschine.

Fig. 2:	Eine schematische Darstellung einer Übertragung von einem Satelliten erfassten Daten an die Arbeitsmaschine.

Fig. 3:	Eine Draufsicht auf die erfindungsgemäße landwirtschaftliche Arbeitsmaschine aus Figur 1.

Fig. 4:	Eine schematische Ansicht zweier Sensoren eines Vorfelderfassungssystems der landwirtschaftlichen Arbeitsmaschine aus Figur 1.

Fig. 5:	Wie Figur 4, in einer alternativen Ausgestaltung des Vorfelderfassungssystems.

Fig. 6:	Wie Figur 4, in einer weiteren alternativen Ausgestaltung des Vorfelderfassungssystems.

Fig. 7:	Eine schematische Darstellung eines Datenaustauschs zwischen einer Mehrzahl erfindungsgemäßer Arbeitsmaschinen.

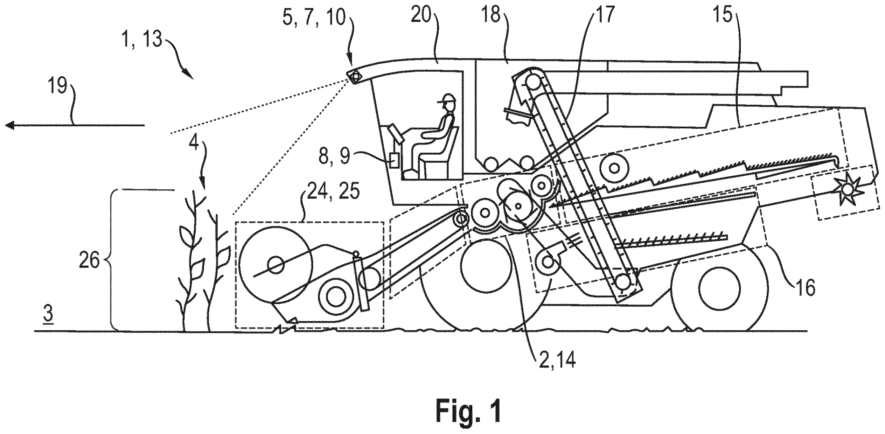

Eine erfindungsgemäße landwirtschaftliche Arbeitsmaschine 1 ist in den **Figuren 1 bis 7** gezeigt. Die Arbeitsmaschine 1 ist in Form eines Mähdrehschers ausgebildet. Der selbstfahrende Mähdrescher 13 weist mehrere Arbeitsorgane 2 zum Aufnehmen, Bearbeiten und Weiterleiten von Erntegut 4 eines abzuerntenden Felds 3 auf.

So weist der Mähdrescher 13 ein Dreschwerk 14 zum Dreschen von aufgenommenem Erntegut 4 zu Korngut auf. Unter dem Erntegut 4 ist dabei das gesamte vom abzuerntenden Feld 3 aufgenommene und dem Dreschwerk 14 zugeführte Material zu verstehen, wobei das Korngut dann die von dem Mähdrescher 13 aus dem Erntegut 4 zu gewinnenden Körner bezeichnet.

Grundsätzlich dient das Dreschwerk 14 zum Ausreiben des überwiegenden Teils des Kornguts aus dem Stroh des Ernteguts 4 durch den Dreschvorgang. In dem als Abscheideanordnung 15 ausgestalteten Arbeitsorgan 2 wird dann das Erntegut 4 mit dem in ihm verbliebenen Kornanteil so bewegt, z.B. geschüttelt, dass auch das verbliebene Korngut möglichst aus dem Stroh und dem sonstigen Erntegut 4 herausgetrennt wird. Das im Dreschwerk 14 und der Abscheideanordnung 15 gewonnene Korngut wird dann dem als Reinigungsanordnung 16 ausgestalteten Arbeitsorgan 2 zugeführt. In der Reinigungsanordnung 16, welche regelmäßig mehrstufig ist, werden dann noch bis hierher im Korngut mitgeführte Nichtkornbestandteile, z.B. Spreu und Strohteile, sowie unausgedroschenes Material, wie etwa Ährenspitzen oder Grannen, von dem Korngut getrennt. Anschließend gelangt das gereinigte Korngut über eine Transportanordnung 17, z.B. einem Kornelevator, in einen Korntank 18. Das ausgedroschene Stroh - also das verbliebene Erntegut 4 in der Abscheideanordnung 15 - wird von dem Mähdrescher 13 abgelegt, z.B. als Schwad entlang einer Fahrspur des Mähdreschers 13.

Die vorgenannten Arbeitsorgane 2 werden über einen nicht in den Figuren gezeigten Fahrantrieb in Form eines Verbrennungsmotors antriebstechnisch versorgt. Dieser Verbrennungsmotor ist neben dem Antrieb der Arbeitsorgane 2 zum Vortrieb der selbstfahrenden landwirtschaftlichen Arbeitsmaschine 1 mit einer Fahrgeschwindigkeit in Richtung einer Fahrtrichtung 19 entlang des abzuerntenden Felds 3 ausgebildet. Der Verbrennungsmotor kann mittels wenigstens einer und/oder mehreren Kopplungsvorrichtungen mit den Arbeitsorgangen zum Antrieb gekoppelt sein.

Die obigen Arbeitsorgane 2 können jeweils durch die Vorgabe verschiedener Maschinenparameter angesteuert werden. Ein obiges Dreschwerk 14 kann beispielsweise durch die Vorgabe verschiedener Dreschwerksparameterparameter angesteuert werden. Hierunter fallen in Abhängigkeit vom Aufbau des Dreschwerks 14 Antriebsparameter wie beispielsweise eine Trommeldrehzahl oder sonstige Bewegungskennzahlen der Dreschtrommel sowie eine Korbweite - also der Abstand zwischen der Dreschtrommel und einem Dreschkorb. Sofern das Dreschwerk 14 Entgrannerklappen aufweist, können auch diese im Rahmen der Ansteuerung des Dreschwerks 14 verstellt werden.

Es ist weiter ein Vorfelderfassungssystem 5 zur Erfassung von Informationen hinsichtlich eines geografischen Vorfelds 6 des selbstfahrenden Mähdreschers 13 vorgesehen. Das Vorfeld 6 des Mähdreschers 13 ist in einem vorwärtigen Bereich des Mähdreschers 13 gelegen. Das Vorfelderfassungssystem 5 weist wiederum einen Sensor 7 auf, der frontseitig an einer Fahrerkabine 20 des Mähdreschers 13 angeordnet ist. Der Sensor 7 ist in Form eines LiDAR-Sensor 10s ausgebildet und dazu vorgesehen, Informationen betreffend das geografische Vorfeld 6 des Mähdreschers 13 zu ermitteln. Der LiDAR-Sensor 10 ermittelt dabei die Bestandshöhe sowie die Teilbreite 12 des abzuerntenden Felds 3.

Darüber hinaus weist der Mähdrescher 13 ein Steuersystem 8 auf, welches wiederum mit einer Recheneinheit 9 versehen ist. Die Recheneinheit 9 ist dabei dazu vorgesehen und eingerichtet, die von dem Vorfelderfassungssystem 5 erfassten Informationen zu einem Maschinenparameter zu verarbeiten. Bei dem Maschinenparameter handelt es sich im vorliegenden Fall um eine Fahrgeschwindigkeit, mithin um einen Parameter zur Ansteuerung des Fahrantriebs des Mähdreschers 13. Dem Steuersystem 8 ist darüber hinaus eine nicht in den Figuren dargestellte Regeleinrichtung zugeordnet. Die Regeleinrichtung dient dazu, den von der Recheneinheit 9 ermittelten Maschinenparameter an den Fahrantrieb weiterzuleiten. Eine dem Fahrantrieb zugeordnete Fahrgeschwindigkeitssteuerung **25** ermöglicht sodann eine Ansteuerung des Fahrantriebs mit Vorgabe der ermittelten optimalen Fahrgeschwindigkeit.

Die Bestimmung des Maschinenparameters, d.h. einer einzustellenden Soll-Fahrgeschwindigkeit, erfolgt dabei wie folgt:

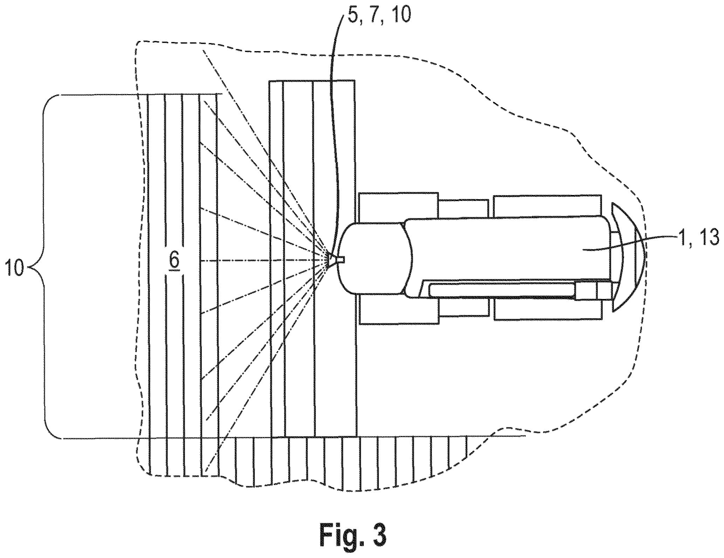

In einem ersten Schritt wird eine aktuelle Teilbreite **12** des Mähdreschers **13** mittels des LiDAR-Sensor **10**s erfasst, wie aus **Figur 3** erkennbar ist. Die aktuelle Teilbreite **12** wird sodann in einem zweiten Schritt als eine erste Vorfeldinformation an das Steuersystem **8** übermittelt. Im gleichen Zug erfasst der LiDAR-Sensor **10** die aktuelle Schnitthöhe des abzuerntenden Felds **3** und übermittelt diese als dritte Vorfeldinformation an das Steuersystem **8**.

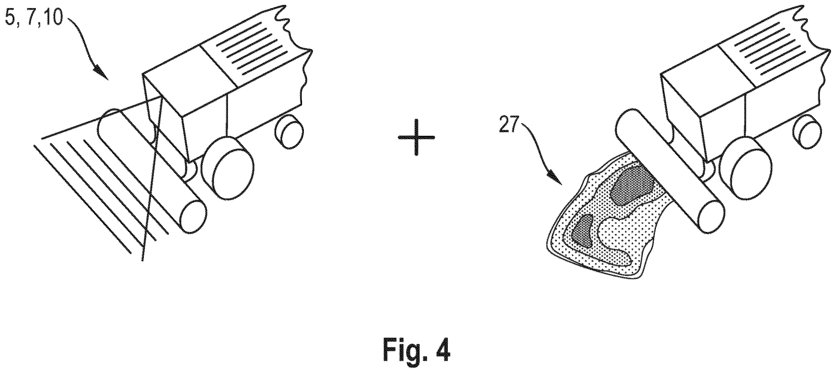

In einem dritten Schritt wird eine zweite Vorfeldinformation an das Steuersystem **8** übermittelt. Bei der zweiten Vorfeldinformation handelt es sich um eine Information, die einer Biomasseprognosekarte **27** entnommen wurde, welche schematisch in den **Figuren 4 bis 7** gezeigt ist. Bei der Information handelt es sich um einen Wert einer prognostizierten Biomasse in dem Vorfeld **6** des Mähdreschers **13**.

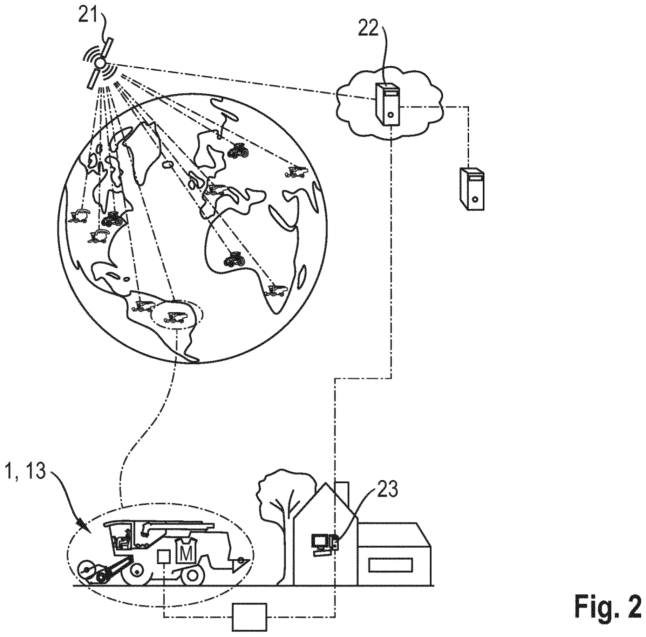

Die Biomasseprognosekarte **27** wurde dabei zeitlich vorangegangen auf Basis von Satellitenbildern des abzuerntenden Felds **3** erstellt, wie aus **Figur 2** erkennbar ist. Die aufgenommenen Satellitenbilder wurden mittels eines Satelliten erstellt und an eine auf der Erde angeordnete Datenverarbeitungseinrichtung übertragen, welche sodann eine Biomasseprognosekarte **27** erstellt hat. Diese wurde wiederum an eine Datenübertragungseinrichtung **23** übertragen, welche drahtlos an den Mähdrescher **13** übertragen wurde. Beispielhaft kann vorgesehen sein, dass die Biomasseprognosekarte **27** des abzuerntenden Felds **3** in einer Speichereinheit des Steuersystems **8** des Mähdreschers **13** abgelegt ist und von der Recheneinheit **9** abgerufen werden kann.

Aus der ersten Vorfeldinformation, der zweiten Vorfeldinformation und der dritten Vorfeldinformation wird in einem nächsten Schritt ein voraussichtlicher Erntegutdurchsatz bestimmt. Auf Basis des prognostizierten Erntegutdurchsatzes wird sodann der Maschinenparameter mittels der Recheneinheit **9** des Steuersystems **8** bestimmt. Dieser wird anschließend von der Regeleinrichtung an die Fahrgeschwindigkeitssteuerung **25** übertragen und zur Steuerung des Fahrantriebs genutzt. Die Fahrgeschwindigkeit des Mähdreschers **13** kann auf diese Weise optimal auf das abzuerntende Feld **3** und das zur Verfügung stehende Erntegut **4** angepasst werden.

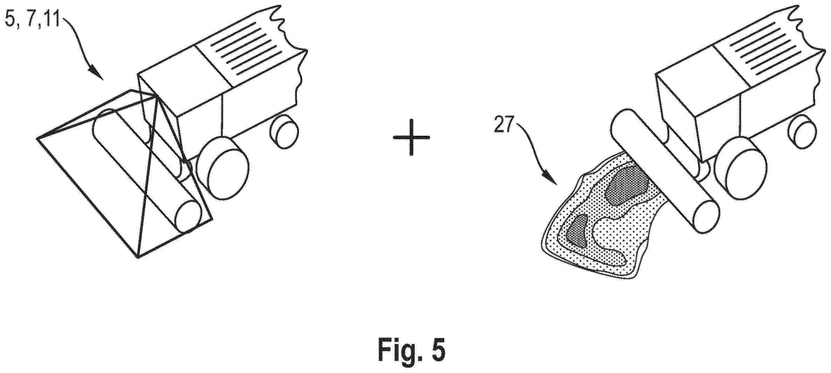

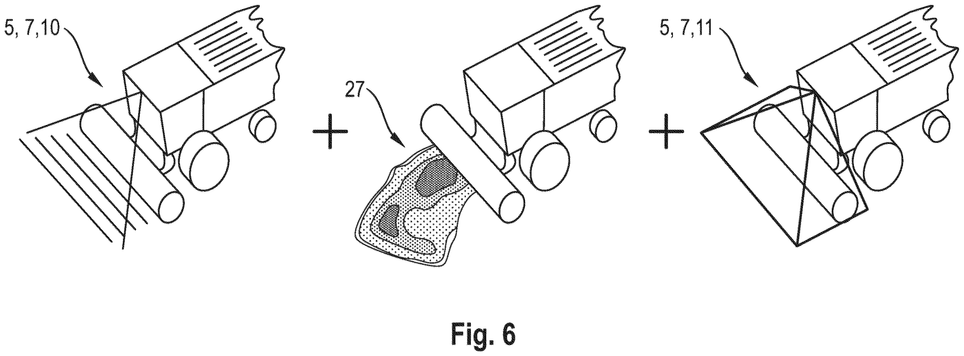

Die **Figur 4** zeigt wie auch die **Figuren 5 und 6** schematisch die bei der Ermittlung des Erntegutdurchsatzes verwendeten technischen Umsetzungen zur Ermittlung der zugehörigen Vorfeldinformationen. In den Figuren ist zwar jeweils eine Arbeitsmaschine **1** schematisch angedeutet. Die Figuren sollen jedoch lediglich die in einer Arbeitsmaschine **1** zeitgleich zum Einsatz kommenden Systeme zur Erfassung der Informationen betreffend das geografische Vorfeld der Arbeitsmaschine **1** aufzeigen. Mit anderen Worten ist vorgesehen, dass die verschiedenen Ausgestaltungen zur Erfassung von Vorfeldinformationen in einer einzigen landwirtschaftlichen Arbeitsmaschine **1** verwirklicht sind.

Gemäß dem vorbeschriebenen Verfahren können einerseits Vorfeldinformationen, die mittels des an der landwirtschaftlichen Arbeitsmaschine **1** angeordneten LiDAR-Sensors **10** ermittelt wurden, und andererseits Vorfeldinformationen, die aus der Biomasseprognosekarte **27** entnommen wurden, herangezogen. Eine derartige Ausführung ist in der **Figur 4** gezeigt.

Eine alternative Ausgestaltung des erfindungsgemäßen Verfahrens kann jedoch auch vorsehen, dass der LiDAR-Sensor **10**, wie in **Figur 5** gezeigt, gegen eine an der landwirtschaftlichen Arbeitsmaschine **1** angeordnete Kamera **11** ersetzt oder - wie in **Figur 6** gezeigt - um diese ergänzt wird, sodass dem Vorfelderfassungssystem **5** zwei Sensoren **7** zugeordnet sind. Der Einsatz eines LiDAR-Sensors **10** oder einer Kamera **11** hat jeweils Vor- und Nachteile, wobei die Nachteile bei einer Ausgestaltung gemäß **Figur 6,** d.h. einer Kombination aus LiDAR-Sensor **10** und Kamera **11,** durch den jeweilig anderen Sensor **7** ausgeglichen werden können.

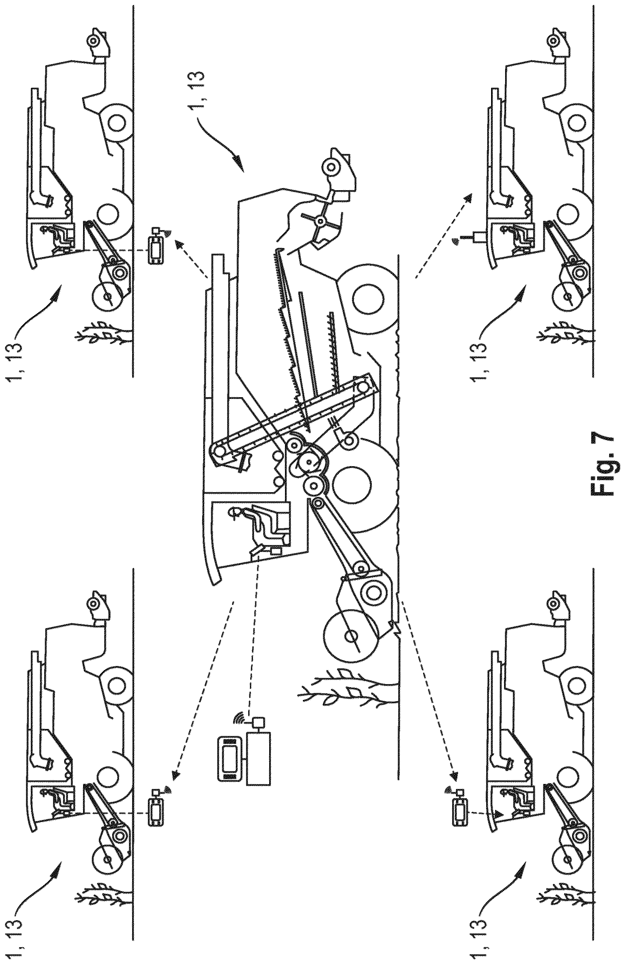

Bei dem in den **Figuren 1 bis 6** gezeigten Mähdrescher **13** ist das Vorfelderfassungssystem **5** an demjenigen Mähdrescher **13** angeordnet, dessen Fahrgeschwindigkeit einzustellen ist. Alternativ dazu kann es jedoch vorgesehen sein, dass ein weiteres Vorfelderfassungssystem **5** an einer weiteren, vorausfahrenden Arbeitsmaschine **1** angeordnet ist, wie in **Figur 7** gezeigt ist. Weiter ist es denkbar, dass ein Vorfelderfassungssystem **5** an einem von der Arbeitsmaschine **1** separaten Messfahrzeug oder anderweitig separat von der Arbeitsmaschine **1** angeordnet ist. In jedem Fall kann vorgesehen sein, dass die von den jeweiligen Vorfelderfassungssystemen **5** erfassten Informationen betreffend das abzuerntende Feld **3** zwischen den Arbeitsmaschinen **1** ausgetauscht und bei der Bestimmung eines jeweiligen Maschinenparameters berücksichtigt werden.

**Bezugszeichenliste**

| | |
|---|---|
| 1 | Arbeitsmaschine |
| 2 | Arbeitsorgan |
| 3 | Feld |
| 4 | Erntegut |
| 5 | Vorfelderfassungssystem |
| 6 | Vorfeld |
| 7 | Sensor |
| 8 | Steuersystem |
| 9 | Recheneinheit |
| 10 | LiDAR-Sensor |
| 11 | Kamera |
| 12 | Teilbreite |

13 Mähdrescher
14 Dreschwerk
15 Abscheideanordnung
16 Reinigungsanordnung
17 Transportanordnung
18 Korntank
19 Fahrtrichtung
20 Fahrerkabine
21 Satellit
22 Datenverarbeitungseinrichtung
23 Datenübertragungseinrichtung
24 Speichereinheit
25 Fahrgeschwindigkeitssteuerung
26 Bestandshöhe
27 Biomasseprognosekarte

**Patentansprüche**

1. Verfahren zur Ansteuerung mindestens einer selbstfahrenden landwirtschaftlichen Arbeitsmaschine (1), die Arbeitsmaschine (1) umfassend

   - mindestens ein Arbeitsorgan (2) zur Verarbeitung eines von einem abzuerntenden Feld (3) aufgenommenen Ernteguts (4) im Rahmen eines Ernteprozesses,
   - mindestens einen Fahrantrieb zum Antrieb der Arbeitsmaschine (1),
   - mindestens ein Vorfelderfassungssystem (5) zur Erfassung von Informationen hinsichtlich eines geografischen Vorfelds (6) der selbstfahrenden Arbeitsmaschine (1), wobei das Vorfelderfassungssystem (5) mindestens einen an der selbstfahrenden Arbeitsmaschine (1) angeordneten Sensor (7) umfasst,
   - mindestens ein Steuersystem (8), wobei das Steuersystem (8) mindestens eine Recheneinheit (9) zur Verarbeitung der von dem Vorfelderfassungssystem (5) erfassten Informationen zu mindestens einem Maschinenparameter zur Ansteuerung des mindestens einen Fahrantriebs und/oder zu mindestens einem Maschinenparameter des mindestens einen Arbeitsorgans (2) der selbstfahrenden Arbeitsmaschine (1) umfasst,

   **gekennzeichnet durch die folgenden Verfahrensschritten:**

   - Erfassen einer ersten Vorfeldinformation des geografischen Vorfelds (6) mittels des Sensors (7) des Vorfelderfassungssystems (5).
   - Übermitteln der ersten Vorfeldinformation an das Steuersystem (8).
   - Übermitteln einer zweiten Vorfeldinformation an das Steuersystem (8), wobei die zweite Vorfeldinformation mindestens eine Information aus einer Biomasseprognosekarte (27) umfasst.
   - Bestimmen mindestens eines Maschinenparameters zur Ansteuerung des Fahrantriebs und/oder des Arbeitsorgans (2) der selbstfahrenden Arbeitsmaschine (1) in Abhängigkeit zumindest der ersten und der zweiten Vorfeldinformation mittels der Recheneinheit (9) des Steuersystems (8).

2. Verfahren nach Anspruch 1, **dadurch gekennzeichnet, dass** es sich bei der ersten Vorfeldinformation um eine Bestandsdichte, eine Schnitthöhe, eine Bestandshöhe (26) oder eine Teilbreite (12) des geografischen Vorfelds (6) der Arbeitsmaschine (1) handelt.

3. Verfahren nach Anspruch 1 oder 2, **dadurch gekennzeichnet, dass** das Vorfelderfassungssystem (5) eine dritte Vorfeldinformation erfasst, wobei die dritte Vorfeldinformation ebenfalls bei der Bestimmung des Maschinenparameters berücksichtigt wird.

4. Verfahren nach Anspruch 1 oder 2, **dadurch gekennzeichnet, dass** der die erste Vorfeldinformation erfassende Sensor (7) als LiDAR-Sensor (10) (7) ausgebildet ist.

5. Verfahren nach Anspruch 1 oder 2, **dadurch gekennzeichnet, dass** der die erste Vorfeldinformation erfassende Sensor (7) als Kamera (11), vorzugsweise als Stereo-Kamera (11), ausgebildet ist.

6. Verfahren nach einem der Ansprüche 3 bis 5, **dadurch gekennzeichnet, dass** das Vorfelderfassungssystem (5) zwei Sensoren (7) aufweist, wobei ein erster Sensor (7) als LiDAR-Sensor (10) (7) ausgebildet ist, während ein zweiter Sensor (7) als Kamera (11) ausgebildet ist, wobei der erste Sensor (7) die erste Vorfeldinformation erfasst, während der zweite Sensor (7) die dritte Vorfeldinformation erfasst.

7. Verfahren nach einem der vorhergehenden Ansprüche, **dadurch gekennzeichnet, dass** der Maschinenparameter in Abhängigkeit eines von der Recheneinheit (9) zumindest auf Basis der ersten und der zweiten Vorfeldinformation ermittelten Erntegutdurchsatzes bestimmt wird.

8. Verfahren nach Anspruch 7, **dadurch gekennzeichnet, dass** der Erntegutdurchsatz in Abhängigkeit der ersten, der zweiten und der dritten Vorfeldinformation bestimmt wird, wobei es sich

   - bei der ersten Vorfeldinformation um eine aktuelle Teilbreite (12) des geografischen Vorfelds (6) und

- bei der dritten Vorfeldinformation um eine aktuelle Schnitthöhe des geografischen Vorfelds (6) handelt.

9. Verfahren nach Anspruch 8, **dadurch gekennzeichnet, dass** der Erntegutdurchsatz in Abhängigkeit der ersten, zweiten, dritten und einer vierten Vorfeldinformation bestimmt wird, wobei es sich bei der vierten Vorfeldinformation um eine Bestandshöhe (26) des geografischen Vorfelds (6) handelt.

10. Verfahren nach einem der vorhergehenden Ansprüche, **dadurch gekennzeichnet, dass** die Biomasseprognosekarte (27) auf Satellitenbildern des abzuerntenden Felds (3) basiert.

11. Verfahren nach einem der vorhergehenden Ansprüche, **dadurch gekennzeichnet, dass** die Biomasseprognosekarte (27) in Abhängigkeit einer Reflexion des Sonnenlichts der auf dem Feld (3) befindlichen Pflanzen bestimmt wird, wobei hierzu ein normierter differenzierter Vegetationsindex bestimmt wird.

12. Verfahren nach Anspruch 11, **dadurch gekennzeichnet, dass** es sich bei der zweiten Vorfeldinformation um einen Wert des Vegetationsindex handelt.

13. Verfahren nach einem der vorhergehenden Ansprüche, **dadurch gekennzeichnet, dass** es sich bei dem Maschinenparameter um eine Fahrgeschwindigkeit der landwirtschaftlichen Arbeitsmaschine (1) handelt.

14. Selbstfahrende landwirtschaftliche Arbeitsmaschine (1), **dadurch gekennzeichnet, dass** die Arbeitsmaschine (1) zur Durchführung eines Verfahrens nach einem der Ansprüche 1 bis 13 geeignet ist.

15. Selbstfahrende landwirtschaftliche Arbeitsmaschine (1) nach Anspruch 14, **dadurch gekennzeichnet, dass** die Arbeitsmaschine (1) in Form eines Feldhäckslers oder eines Mähdreschers (13) ausgebildet ist.

Fig. 1

EP 4 523 513 A1

Fig. 2

**Fig. 3**

27

5, 7,10

Fig. 4

Fig. 5

**Fig. 6**

EP 4 523 513 A1

Fig. 7

Europäisches
Patentamt

European
Patent Office

Office européen
des brevets

# EUROPÄISCHER RECHERCHENBERICHT

**Nummer der Anmeldung**

EP 24 19 0232

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2022/110238 A1 (VANDIKE NATHAN R [US] ET AL) 14. April 2022 (2022-04-14) * das ganze Dokument * * Absätze [0046], [0092], [0105] * ----- | 1-15 | INV. A01D41/127 |
| X | DE 10 2021 113838 A1 (DEERE & CO [US]) 1. Dezember 2022 (2022-12-01) * das ganze Dokument * * Absatz [0026] * * Abbildung 1 * ----- | 1-15 | |
| X | EP 3 981 244 A1 (DEERE & CO [US]) 13. April 2022 (2022-04-13) * das ganze Dokument * ----- | 1-15 | |
| X | DE 10 2021 123769 A1 (DEERE & CO [US]) 14. April 2022 (2022-04-14) * das ganze Dokument * * Anspruch 1 * ----- | 1-15 | |
| X | DE 10 2021 124763 A1 (DEERE & CO [US]) 14. April 2022 (2022-04-14) * das ganze Dokument * ----- | 1-15 | RECHERCHIERTE SACHGEBIETE (IPC) |
| X | EP 2 764 764 A1 (DEERE & CO [US]) 13. August 2014 (2014-08-13) * das ganze Dokument * * Absätze [0013], [0028] * ----- | 1-15 | A01D A01B |
| X,D | EP 3 097 759 A1 (CLAAS SELBSTFAHR ERNTEMASCH [DE]) 30. November 2016 (2016-11-30) * das ganze Dokument * * Absatz [0041] * ----- | 1-15 | |

Der vorliegende Recherchenbericht wurde für alle Patentansprüche erstellt

| Recherchenort | Abschlußdatum der Recherche | Prüfer |
|---|---|---|
| München | 9. Januar 2025 | Wagner, A |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 24 19 0232

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-01-2025

| Im Recherchenbericht angeführtes Patentdokument | Datum der Veröffentlichung | Mitglied(er) der Patentfamilie | Datum der Veröffentlichung |
|---|---|---|---|
| US 2022110238 A1 | 14-04-2022 | BR 102021017298 A2 | 26-04-2022 |
| | | CN 114303592 A | 12-04-2022 |
| | | US 2022110238 A1 | 14-04-2022 |
| | | US 2024090358 A1 | 21-03-2024 |
| DE 102021113838 A1 | 01-12-2022 | BE 1029377 A1 | 01-12-2022 |
| | | DE 102021113838 A1 | 01-12-2022 |
| EP 3981244 A1 | 13-04-2022 | CA 3130197 A1 | 09-04-2022 |
| | | EP 3981244 A1 | 13-04-2022 |
| DE 102021123769 A1 | 14-04-2022 | KEINE | |
| DE 102021124763 A1 | 14-04-2022 | KEINE | |
| EP 2764764 A1 | 13-08-2014 | DE 102013201996 A1 | 07-08-2014 |
| | | EP 2764764 A1 | 13-08-2014 |
| | | US 2014215984 A1 | 07-08-2014 |
| EP 3097759 A1 | 30-11-2016 | DE 102015108374 A1 | 01-12-2016 |
| | | EP 3097759 A1 | 30-11-2016 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3085221 B1
- EP 3097759 A1
- EP 3530098 A1
- EP 3772269 A1